(19) Europäisches Patentamt
European Patent Office
Office européen des brevets

(11) **EP 4 543 106 A1**

(12) **EUROPEAN PATENT APPLICATION**

(43) Date of publication:
**23.04.2025 Bulletin 2025/17**

(21) Application number: **23306847.7**

(22) Date of filing: **20.10.2023**

(51) International Patent Classification (IPC):
*H04W 56/00* (2009.01)  *G01S 5/06* (2006.01)
*G01S 5/14* (2006.01)  *H04W 64/00* (2009.01)
*H04W 74/0833* (2024.01)

(52) Cooperative Patent Classification (CPC):
**H04W 56/0065; G01S 5/06; G01S 5/14;**
H04W 64/003; H04W 74/0833; H04W 76/27

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Eurecom
06410 Biot (FR)**

(72) Inventors:
• **MUNDLAMURI, Rakesh
06410 BIOT (FR)**
• **GANGULA, Rajeev
06410 BIOT (FR)**

• **ESRAFILIAN, Omid
06410 BIOT (FR)**
• **KALTENBERGER, Florian
06410 BIOT (FR)**
• **KNOPP, Raymond
06410 BIOT (FR)**
• **GESBERT, David
06410 BIOT (FR)**
• **WAGNER, Sebastian
06410 BIOT (FR)**
• **LE, Trung Kien
06410 BIOT (FR)**

(74) Representative: **Atout PI Laplace
Immeuble Up On
25 Boulevard Romain Rolland
CS 40072
75685 Paris Cedex 14 (FR)**

(54) **SYSTEM AND A METHOD FOR IMPROVED ROUND TRIP TIME ESTIMATION**

(57)      There is provided a method of positioning a user equipment (1) implemented in a communication system (100) comprising at least the user equipment and a base station (2), the method comprising the following steps implemented at the base station (2):
- Generating (506, 512) a DCI scrambled with a type of RNTI, the RNTI type depending on the RRC state of the user equipment, the generated DCI being configured to trigger a Round Trip Time (RTT) procedure;
- Transmitting (506, 512) the generated DCI to the User Equipment (1).

An uplink synchronisation procedure (e.g. RACH procedure) is initiated by the user equipment (1) in response to the receipt of the generated DCI, the user equipment sending the uplink synchronisation signal (e.g. RACH preamble) and a wideband signal (e.g. aperiodic SRS) next to the uplink synchronisation signal, in the same time slot, the method estimating (1302) the round trip time RTT between the base station (2) and the user equipment (1) from the time of arrival estimated from said wideband signal impulse response and the sampling rate of communication system.

FIGURE 9

## Description

### Technical field

The disclosure generally relates to digital communications and in particular to system and a method for improved round trip time estimation.

### Background

Mobile communications systems are widely deployed to support communication with multiple users.

To meet the increasing demands for high-speed and low-latency connectivity, for more reliable communication networks to support emerging applications and technologies, mobile communication technologies are advancing to the future 5th generation (5G) mobile communication systems and beyond generations. In particular, 5G New Radio (5G NR) technology is being standardized to provide rich, reliable and hyper-connected communications.

A communication system forms a network comprising base stations providing radio coverage over a geographical area forming a cell. The cells serve User Equipments (UE) through the base stations. A User Equipment can communicate using base stations. A user equipment transmit data over an air or radio interface to the base stations in uplink (UL) transmissions and radio base stations transmit data over an air or radio interface to the user equipments in downlink (DL) transmissions.

Existing mobile communication systems use multiple-access technologies to support communication with multiple users by sharing available system resources.

A Random Access (RACH) refers to a procedure where a User Equipment (UE) can create an initial connection with the network. In some networks, like LTE, the RACH procedure is performed in 4 steps (4 step RACH) using 4 signals transmitted between the UE and the base station. A two-step RACH procedure (two step RACH WI) was also approved for 3GPP Release 16 (ZTE, "RP-200085 Revised WID on 2-step RACH for NR," 2020) after the failure of specifying a design based on non-orthogonal multiple-access (NOMA). The two-step RACH procedure is performed in 2 steps using only two signals transmitted between the UE and the base station, including a message transmission (MsgA) from the User Equipment to the base station and a message reception at the User Equipment from the base station.

A RACH procedure uses a Round Trip Time (RTT) estimation procedure to estimate the range between the user and the base-station antenna.

However, existing RTT schemes suffer from a number of shortcomings. In particular, they require transmitting a wideband signal in the downlink, which increases the frequency resources and the computational complexity at the UE. Further, the time needed to obtain the RTT is high as in existing RTT schemes, it is required to send a sounding reference signal (SRS) for positioning in the uplink and a positioning reference signal (PRS) in the downlink.

There is accordingly a need for an improved round trip time estimation scheme.

### Summary of the disclosure

To address these and other problems, there is provided a method of positioning a user equipment implemented in a communication system comprising at least the user equipment and a base station, the user equipment and the base station using state-based signalling mechanism based on the state of the user equipment to communicate through a network, the state being an inactive state or active state. Advantageously, the method comprises the following steps implemented at the base station:

- Determining a wideband signal configuration using the state-based signalling mechanism;
- Generating a Downlink Control Information DCI scrambled with a type of radio network temporary identifier, the type of radio network temporary identifier RNTI depending on the state of the user equipment,
- Transmitting the generated DCI to the User Equipment.

The method further comprises, in response to an uplink synchronisation procedure initiated by the user equipment from the received generated DCI, the following steps implemented at the base station:

- Receiving a first uplink synchronisation message from the user equipment comprising an uplink synchronisation signal in a given time slot;
- Receiving a wideband signal impulse response corresponding to the wideband signal configuration besides the uplink synchronisation signal, in the given time slot ;
- Estimating the round trip time RTT between the base station and the user equipment from the time of arrival estimated from the wideband signal impulse response and the sampling rate of the modulation system used by the communication system;

- Estimating at least one positioning parameter related to the user equipment position from the estimated RTT.

In some embodiments, the round trip time RTT may be estimated according to:

$$RTT = \frac{p}{f_s},$$

where p designates the peak index of the time of arrival estimated from the SRS channel impulse response and $f_s$ is the sampling rate of the communication system.

In some embodiments, the at least one positioning parameter may comprise the distance d between the base station and the User Equipment, the distance being determined as:

$$d = \frac{RTT*c}{2} = \frac{p*c}{2f_s},$$

where c designates the speed of light.

In some aspects, the base station may comprise a plurality of antennas, the plurality of antenna comprising at least a calibrated antenna and a single base-station, and the at least one positioning parameter may comprise angular information estimated using the plurality of wideband signal received at the plurality of multiple antennas from the user equipment.

In some aspects, the uplink synchronization procedure may be a RACH procedure, the uplink synchronization signal being a RACH preamble, the state-based signalling mechanism being a RRC mechanism, the active state being a RRC-CONNECTED state and the inactive state being a RRC_INACTIVE state, and the wideband signal being an aperiodic SRS signal.

In such embodiments related to the RACH procedure, the user equipment and the base station use a Radio Resource Control (RRC) mechanism (as the base-state signalling mechanism) to communicate through a network, the User Equipment being in a given Radio Resource Control (RRC) state, the RRC state being an inactive RRC state or a connected RRC state, and the method may comprise the following steps implemented at the base station:

- Determining an aperiodic Sounding Reference Signal (SRS) configuration;
- Generating a Downlink Control Information DCI scrambled with a type of radio network temporary identifier, the type of radio network temporary identifier RNTI depending on the RRC state of the user equipment,
- Transmitting the generated DCI to the User Equipment (1).

The method further comprises, in response to a RACH procedure initiated by the user equipment from the received generated DCI, the following steps implemented at the base station:

- Receiving a first RACH message from the user equipment comprising a RACH preamble in a given time slot;
- Receiving an aperiodic SRS channel impulse response corresponding to the SRS configuration besides the RACH preamble, in the given time slot ;
- Estimating the round trip time RTT between the base station and the user equipment from the time of arrival estimated from the SRS channel impulse response and the sampling rate of the communication system (sampling rate used to generate modulation symbols such as OFDM symbols);
- Estimating at least one positioning parameter related to the user equipment position from the estimated RTT.

The step of determining the wideband signal configuration, at the base station, may then comprise using a RRC Setup in the beginning of the User Equipment connection or using a RRC Reconfiguration.

In some embodiments, if the given RRC state of the User Equipment is a RRC_INACTIVE state, the type of the radio network temporary identifier is a P-RNTI, the DCI generation step may comprise generating a DCI scrambled with a P-RNTI.

Alternatively, if the given RRC state of the User Equipment is a RRC_CONNECTED state, the type of the radio network temporary identifier is a C-RNTI, the DCI generation step may comprise generating a DCI scrambled with a C-RNTI.

In some aspects, the method may comprise an initialization step comprising selecting a DCI based signalling procedure chosen among a first DCI based signalling procedure and a second DCI based signalling procedure.

In some embodiments, in the first DCI based signalling procedure, the step of generating the DCI may comprise using a scrambled DCI format derived from the DCI Format 1_0, the DCI format derived from the DCI Format 1_0 comprising a SRS request field, the SRS request field being used by the user equipment to determine if the SRS is to be transmitted to the base station, in the given time slot along with the RACH procedure, in response to the receipt of the generated DCI.

The DCI format derived from the DCI Format 1_0 may comprise the fields of the DCI Format 1_0 with CRC scrambled with P-RNTI for RAN Paging, and an additional field corresponding to the SRS request field comprising 2 or 3 bits.

Alternatively, the DCI format derived from the DCI Format 1_0 may comprise the fields of the DCI Format 1_0 with CRC scrambled by C-RNTI for PDCCH order, and an additional field corresponding to the SRS request field comprising 2 or 3 bits.

In some embodiments, the second DCI based signalling procedure may comprise scrambling a DCI in a specific DCI Format X_Y, the DCI Format X_Y being used by the user equipment to determine if the SRS is to be transmitted to the base station, in the given time slot along with the RACH procedure, in response to the receipt of the generated DCI.

In one embodiment, the DCI Format X_Y may comprise:

- A full I-RNTI or short I-RNTI field for identifying a suspended User Equipment context of a user equipment in RRC_INACTIVE state;

- A Random Access Preamble index field for indicating the index of the Random access preamble;

- An Uplink/Supplemental Uplink indicator for indicating which uplink carrier to be used in the base station cell to transmit the PRACH;

- A Synchronization Signal / Physical Broadcast Channel (SS/PBCH) index field for indicating the SS/PBCH that shall be used to determine the RACH occasion for a PRACH transmission; and

- A PRACH Mask index field for indicating the RACH occasion associated with the SS/PBCH indicated by the SS/PBCH index for the PRACH transmission; and

- A SRS request field.

In some aspects, the DCI Format X_Y may be further adapted to enable Contention Free Random Access.

In some aspects, the random access preamble may be associated with a RACH preamble index, the method comprising mapping the RACH preamble index with a cyclic shift of the SRS.

In some embodiments, the RACH Preamble transmission may be made within a configurable subset of RACH slots, a RACH Slot comprising a number of RACH occasions and a number of SRS occasions, a RACH Occasion being mapped with a SRS occasion.

The method may further comprise the following steps performed at the user equipment:

- Receiving, at the user equipment, the DCI sent from the base station;
- Determining if the received DCI comprises at least one field related to a round trip time estimation scheme;
- Initiating the uplink synchronisation procedure comprising exchanging at least a first message and a second message with the base station,
- Transmitting the uplink synchronisation first message comprising the uplink synchronisation signal to the base station in the given time slot;
- Transmitting the wideband signal to the base station in the given time slot according to the wideband signal configuration.

There is further provided a communication system comprising at least a user equipment and a base station, the user equipment and the base station using a state-based signalling based on the state of the user equipment to communicate through a network, the state being an inactive state or an active state, wherein the base station comprises a positioning device configured to determine positioning information related to the user equipment, wherein the positioning device comprises:

- A wideband signal configuration Unit configured to determine wideband signal configuration using the state-based signalling mechanism;
- A DCI generation unit configured to generate a Downlink Control Information DCI scrambled with a type of radio network temporary identifier, the type of radio network temporary identifier RNTI depending on the state of the user equipment,

- A transmission unit configured to transmit the generated DCI to the User Equipment.

The base station is configured to receive a first uplink synchronisation message from the user equipment comprising an uplink synchronisation signal in a given time slot and wideband signal impulse response corresponding to the wideband signal configuration besides the uplink synchronisation signal, in the given time slot.

The positioning device further comprises:

- A RTT estimation unit configured to estimate the round trip time RTT between the base station and the user equipment from the time of arrival estimated from the wideband signal impulse response and the sampling rate of the modulation system of the communication system;
- A positioning information estimation unit configured to estimate at least one positioning parameter related to the user equipment position from the estimated RTT.

In some embodiments, the user equipment may comprise:

- A DCI verification unit configure to determining if the DCI received from the base station comprises at least one field related to a round trip time estimation scheme;
- An uplink synchronisation signal transmission unit configured to initialize an uplink synchronisation procedure comprising exchanging at least a first message and a second message transmission with the base station, and to transmit the uplink synchronisation first message comprising the uplink synchronisation signal to the base station in the given time slot;
- A wideband signal transmission unit configured to transmit the wideband signal to the base station in the given time slot according to the wideband signal configuration.

In an application of the disclosure to the RACH procedure, the user equipment and the base station using a Radio Resource Control (RRC) mechanism to communicate through a network, the User Equipment being in a given Radio

Resource Control (RRC) state, the RRC state being an inactive RRC state or a connected RRC state, the positioning device may comprise:

- An aperiodic SRS configuration Unit configured to determine an aperiodic Sounding Reference Signal (SRS) configuration;
- A DCI generation unit configured to generate a Downlink Control Information DCI scrambled with a type of radio network temporary identifier, the type of radio network temporary identifier RNTI depending on the RRC state of the user equipment,
- A transmission unit configured to transmit the generated DCI to the User Equipment.

The base station may be then configured to receive a first RACH message from the user equipment comprising a RACH preamble in a given time slot and an aperiodic SRS channel impulse response corresponding to the SRS configuration besides the RACH preamble, in the given time slot.

The positioning device may further comprise:

- A RTT estimation unit configured to estimate the round trip time RTT between the base station and the user equipment from the time of arrival estimated from the SRS channel impulse response and the sampling rate of the communication system (sampling rate of the modulation system used in the communication system, such as OFDM system);
- A positioning information estimation unit configured to estimate at least one positioning parameter related to the user equipment position from the estimated RTT.

The uplink synchronization signal transmission unit, at the User Equipment may be then configured to initialize a RACH procedure comprising exchanging at least a first message and a second message transmission with the base station, and to transmit the RACH first message comprising the RACH preamble to the base station in the given time slot, while the wideband signal transmission unit at the user equipment may be configured to transmit the SRS to the base station in the given time slot according to the SRS configuration.

**Brief description of the drawings**

The accompanying drawings, which are incorporated in and constitute a part of this specification, illustrate various embodiments of the disclosure together with the general description of the disclosure given above, and the detailed description of the embodiments given below.

Figure 1 represents an exemplary communication system in which embodiments of the present disclosure may be implemented.

Figure 2 illustrates the propagation delay between a base station and a user equipment.

Figure 3 depicts a communication system adapted to position a User Equipment, according to some embodiments.

Figure 4 illustrates a time slot comprising a SRS transmission besides a RACH preamble transmission.

Figure 5 is a flowchart representing a method for estimating a round trip time, implemented at a base station according to some embodiments.

Figure 6 is a flowchart representing a method for initiating a 4-step RACH procedure, at a user equipment, and sending SRS for the estimation of the round trip time, according to some embodiments.

Figure 7 is a flowchart representing a method for initiating a 2-step RACH procedure, at a user equipment, and sending SRS for the estimation of the round trip time, according to some embodiments.

Figure 8 is a flow diagram illustrating the data exchanged between the base station and the user equipment in a 4-step RACH procedure to estimate the round trip time, according to some embodiments.

Figure 9 is a flow diagram illustrating the data exchanged between the base station and the user equipment in a 2-step RACH procedure to estimate the round trip time, according to some embodiments.

Figure 10 represents a DCI format derived from the DCI Format 1_0 for RAN Paging that may be used to generate the DCI by the base station, for a user equipment in RRC inactive state.

Figure 11 represents a DCI format derived from the DCI Format 1_0 for PDCCH order that may be used to generate the DCI by the base station, for a user equipment in RRC connected state.

Figure 12 represent a DCI format derived from a DCI Format X_Y that may be used to generate the DCI by the base station.

Figure 13 is a flowchart representing a method for estimating of the round trip time and positioning parameters, according to some embodiments.

## Detailed description

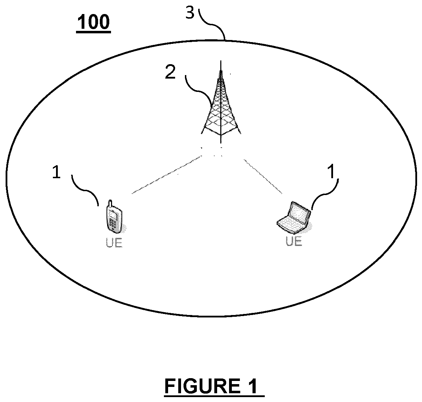

Referring to Figure 1, there is shown an exemplary communication system 100 in which embodiments of the present disclosure may be implemented.
The communication system 100 comprises a mobile communication network 3, one or more user terminals 1 (also referred to as User Equipments UEs, according to 3GPP standard), and one or more base stations 2 (also referred to as a Node, designated by a derivative of the term 'NodeB' such as gNodeB node or gNB in 5G NR). The User terminals 1 will be referred to hereinafter as User Equipments. The base station 2 is associated with a cell defining a geographical cell area. The cell associated with the base station 2 is served by the base stations. One or more user equipments may be included in the cell served by a base station 2.
The communication system 100 may be for example a wireless communication system such as a new radio (NR), a 5G and beyond 5G network.
Although reference will be mainly made to 3GPP network in the following description, the skilled person will readily understand that the embodiments of the disclosure also apply to similar or equivalent networks, such as a successor of the 3GPP network. In the following description, enclosed drawings and appended claims, the use of the term 3GPP and terms related to the 3GPP network should be interpreted accordingly. Similarly, although reference will be made to 5G NR, for illustration purpose, such reference should be interpreted as encompassing any future xG network (6G and beyond) having similar functional components.
A user equipment UE 1 is configured to transmit data to a base station 2 (such as a gNB node) on one or more uplink (UL) channels. The User Equipment 1 may receive data from the base station 2 through one or more downlink channels (DL).
A user equipment 1 may be fixed or mobile and/or may be remotely monitored and/or controlled. A user equipment 1 may be equipped with power sources that provide power to the different components ensuring the UE operation. A User Equipment 1 may be, without limitation, a mobile phone, a computer, a laptop, a tablet, a drone, an IoT device, etc.

The communication network 3 may be any wireless network enabling IoT. Exemplary wireless networks comprise low-power short range networks and LPWANs.

Further, the communication network 3 may accommodate several pairs of user equipments 1. In such embodiments, multiple access techniques and/or network coding techniques may be used in combination with error correction codes and modulation. Exemplary multiple access techniques comprise without limitation Time Division Multiple Access (TDMA), Frequency Division Multiple Access (FDMA), Code Division Multiple Access (CDMA), and Space Division Multiple Access (SDMA), and Non-Orthogonal Multiple Access (NOMA) technology.

In some embodiments, data transmission between a UE 1 and a base station 2 in the communication system 100 may correspond to an uplink communication scenario during which the base station 2 receives data from the UE 1 through the uplink channels (the transmitter is the UE 1 and the receiver is the base station 2) or a downlink communication scenario during which the base station 2 transmit data to the UE 1 through the downlink channels (the transmitter is the base station 2 and the receiver is the UE 1).

The UEs 1 and/or the base stations 2 may be equipped with a plurality of transmit and/or receive antennas, and may implement space-time coding and/or space-time decoding techniques may be used in combination with coded modulations for encoding data both in the time and space dimensions.

A UE 1 may communicate with a base station 2 using a RRC mechanism (RCC is the acronym for Radio Resource Control).

Radio Resource Control (RRC) refers to a layer within the 5G NR protocol stack. The RRC mechanism exists only in the control plane, in a UE 1 and in the base station 2 (gNB).

A UE 1 and a base station 2 may communicate through the communication network 3, via the radio channel using the RRC control mechanism. RRC enables both parties (UE and base station) of a communication to exchange information. Further, the RRC operates within each communicating party (e.g. UE 1 and base station 2) as a control center for all of the lower layers within each system, the lower layers within the UE or the base station representing 'Radio Resources', that is resources required to enable radio communication. The RRC is configured to control all these Radio Resources (for example PHY, MAC, RLC, etc) by configuring them to enable communication between UE and the base station (for example gNB).

The behaviour and functions of RRC are defined by the current state of RRC.

For example in 5G NR, the RRC defines three states (or modes):

- A RRC Idle state (or idle mode) called RRC_IDLE state,
- A RRC connected state (or connected mode) called RRC_CONNECTED state, and
- A RRC inactive state (or inactive mode) called RRC_INACTIVE state.

The 'RRC INACTIVE' state is a state introduced in NR.

For each RRC state, applicable functions are defined according the 3GPP NR standard. Further, the state transitions between two RRC states are defined by state transitions conditions. The state transitions condition may be represented by a state machine.

The UE 1 may be in RRC idle state, after power up.

When a UE 1 wants to connect for outgoing data, calls or SMS (Short Messaging Service), the UE 1 establishes connection with the network using an initial access procedure via RRC connection establishment procedure.

Once the RRC connection is established, the UE is in RRC_CONNECTED state.

In an application of the disclosure to a 5G NR communication system 100, the UE 1 may be in the RRC_CONNECTED state when an RRC connection has been established or in the RRC_INACTIVE state when the RRC connection is suspended. Otherwise (if no RRC connection is established), the UE 1 is in RRC_IDLE state.

The UE 1 may share a random-access channel (RACH) to access the network for communications.

For example, the RACH may be used to setup calls, to access the network for data transmissions, for initial access to a network when the UE transitions from the RRC connected state (RRC_CONNECTED) to the RRC inactive state (RRC_INACTIVE state), or for handover.

UEs in RRC_INACTIVE state may transition into RRC_CONNECTED mode using a RRC resume procedure to transmit user-plane data. This transition may require completing the RACH procedure.

RACH may be used for downlink (DL) and/or uplink (UL) data arrival when the UE device 1 is in RRC idle state (RRC_IDLE) or in the RRC inactive state (RRC_INACTIVE), or transitions to the RRC connected state (RRC_CONNECTED).

The Random Access (RACH) procedure refers to the procedure where the User Equipment (UE) 1 requires the creation of an initial connection with a network 3 using the RACH channel.

Once the RACH procedure is completed, the UE 1 may move to the connected state (RRC_CONNECTED state).

In an application of the disclosure to 5G NR, the RACH procedure may be implemented to enable:

- Initial access from the RRC_IDLE state;

- RRC Connection Re-establishment procedure;

- Handover;

- DL or UL data arrival during RRC_CONNECTED when UL synchronisation status is "non-synchronised";

- Transition from RRC_INACTIVE;

- establishment of time alignment at SCell addition;

- Request for other synchronization information; and/or

- Beam failure recovery.

In an initial access procedure, a Synchronization Signal Block (SSB) is used for downlink synchronization and the random access channel (RACH) is used for the uplink synchronization.

A User Equipment may acquire a System Information Block1 (SIB1) to perform a Contention Based Random Access procedure (CBRA). To acquire such information, a user equipment 1 may further acquire a Master Information Block (MIB) and decode it.

The RACH procedure (also 'called Random Access process') may be performed in 4 steps (4-step RACH procedure) or 2 steps (2-step RACH procedure). To facilitate the understanding of the embodiments of the disclosure, the 4-step and 2-step RACH procedures are described.

The four step RACH procedure comprises exchange of 4 signals corresponding to 4 steps (step 1, step 2, step 3 and step 4).

In the first step (step 1), the UE 1 sends a Random Access Preamble Transmission in a message Msg1 to the base station 2 to transmit the RACH preamble on a determined PRACH time-frequency resource to an appropriate beam of the base station 2. The RACH preamble transmitted by the UE 1 is received at the base station 2 (gNB). The base station 2 (gnB) estimates the delay caused by the RACH preamble due to the propagation distance between UE 1 and the base station 2 (gnB).

In the second step (step 2), the base station 2 sends to the UE 1 a Random Access Response (RAR) in a second message Msg2 (RA response over a PDSCH channel that is a physical channel carrying user data). The RAR comprises the estimated delay sent to the UE 1 by the base station 2 (gnB), and referred to as 'Timing Advance', to indicate the UE 1 to advance its timing to compensate for the propagation distance between UE 1 and base station 2 (gnB). Msg2 may include additional parameter such as comprising parameters such as the random access preamble identifier, timing alignment information, initial uplink grant and a temporary cell radio network temporary identifier (C-RNTI). The RNTI corresponds to an ID of the UE.

In the third step (step 3), the UE 1 sends a Scheduled Uplink Transmission in a third message Msg3, comprising uplink scheduling information, over a PUSCH channel (the Physical Uplink Shared Channel carrying both user data and control signal data). In the third step, the UE 1 applies the timing advance sent by the base station 2 (gnB) and transmits a RRC setup request.

In the fourth step (step 4), the base station 2 sends to the UE 1 Contention Resolution in a fourth message Msg4. In the fourth step, the base station 2 (gnB) refines the delay further using the PUSCH DMRS included in Msg3 and sends the refined timing advance to the UE 1 in the fourth message Msg4.

Alternatively, the RACH procedure may be performed in 2 steps (2-step RACH procedure) using 2 signals exchanged between the UE and the base station (gNB), for example in a 5G NR network.

The 2-step RACH may be applied to RRC_inactive state, RRC-connected state or RRC-IDLE state.

In the 2-step RACH process, Msg1 and Msg3 from the 4-step RACH are combined and referred to as MsgA, while Msg2 and Msg4 from the 4-step RACH are combined and referred to as MsgB. The message MsgA includes a PRACH preamble and PUSCH.

Message MsgB sent in the second step of the 2-step RACH procedure may include other parameters such as the ID of the RACH preamble, a back off indicator, a contention resolution messages, UL/DL grant, and a transmit power control (TPC) commands.

To determine if a RACH procedure is a 4-step or 2-step procedure, a System Information Block (SIB) and a threshold parameter (msgA-RSRP-Threshold) may be used.

A PRACH Preamble transmission is made within a configurable subset of RACH slots that repeat itself every RACH configuration period, within a cell. Each RACH Slot comprises a number of RACH occasions.

A RACH Occasion (RO) refers to resources specified in time and frequency domain that are available for the reception of RACH preamble, and indicates how many different resources there are for each RACH slot. Therefore, within each RACH Slot, there may be a number of RACH occasions which indicates how many different resources there are for the RACH slot.

A PRACH Occasion specifies when to send PRACH. In NR, the time and frequency resource on which a PRACH preamble is transmitted is defined as a PRACH occasion.

In a 3GPP application of the disclosure, in a RACH occasion in a cell, 64 preamble sequences are used in a RACH procedure to generate the PRACH preamble, and a PRACH preamble is a Zadoff-chu sequence.

The message Msg1 in the 4-step RACH procedure or the MsgA in the two step RACH procedure comprises a message payload having a payload size.

According to the prior art round trip time estimation methods, the first message MsgA is sent from the UE 1 to the base station 2 on the physical random access channel (PRACH), and the base station 2 (gnB) estimates the delay caused by the RACH preamble due to the propagation distance between UE 1 and the base station 2 (gnB) in the first step, in response to the receipt of MsgA.

In the second step (step 2), the base station 2 responds with a random access response (RAR) message MsgB which may include a Timing Advance sent by the base station 2 to the User Equipment 1 to adjust its time.

Other than in the initial access, RACH can also be initiated using a RAN paging procedure in some scenarios, such as in situations where the UE 1 is in RRC_INACTIVE state and when a PDCCH order mechanism is used when the UE 1 is in RRC_CONNECTED state.

A RAN Paging is a procedure used to wake up a user equipment 1 in an RRC_INACTIVE state, when data is available to the UE 1 at the network core (for example 5GC). The paging is triggered by base station 2 (gnB) using a Downlink Control Information (DCI) specific Format by scrambling it with a Paging - Radio Network Temporary Identifier (P-RNTI). The DCI may carry the information to schedule for downlink and uplink data and information to adjust the uplink power and may have different formats defined by specific fields. The P-RNTI is used to CRC (Cyclic Redundancy Check) encode paging messages.

In existing approaches, DCI Format 1_0 is used. A user equipment receives the DCI Format 1_0 using P-RNTI that points to the PCCH messages in PDSCH and decodes the PCCH messages. The UE 1 uses a full I-RNTI/short I-RNTI identifier to identify itself among the other UE 1's during paging.

The RRC INACTIVE state helps to reduce latency and conserve the power of the UE 1. After a certain period of data inactivity based on a timer, the UE 1 may transition to the RRC Inactive state. A release request along with a suspend indication may be sent to the UE 1 with a suspend-config parameter (SuspendConfig) that provides information to the UE such as full Inactive RNTI (I-RNTI) and/or short Inactive RNTI (I-RNTI). This suspends the radio connection while maintaining core network connectivity. The UE 1 can resume the radio connection with significantly lower delay and signalling overhead using the RAN paging procedure and the suspend-config parameter (SuspendConfig) than establishing a new connection to the radio and core network.

A PDCCH Order is a mechanism by which the base station 2 forces a UE 1 to initiate PRACH. A PDCCH order is used when the UE1 is in a In RRC_CONNECTED state in order to initiate the RACH procedure when the base station 2 (gnB) detects downlink data present in the MAC buffer to a UE 1 while the UE 1 is out-of-sync. In such scenario, a PDCCH order may be triggered by the base station 2 by sending a DCI including a RACH preamble on the SSB beam index of the UE along with the corresponding SSB (Synchronization Signal Block) index.

In prior art systems, such as in LTE communications systems, the Round Trip Time Estimation is estimated using the timing advance information exchanged in the RACH procedure.

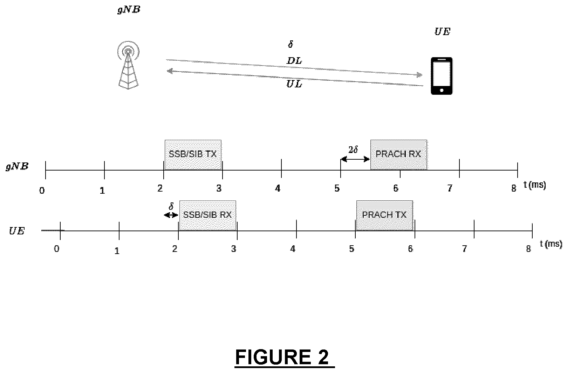

Figure 2 illustrates the time taken for a transmitted signal to reach from a base-station (gNB) a user equipment (UE). This time is known as the propagation delay ($\delta$) between a base-station (gNB) and a user equipment (UE). This delay is caused due to the distance between the base-station (gNB) and the user equipment (UE). As shown in the Figure 2, the transmitted SSB (synchronization signal block used for downlink synchronization) from the base station 2 (gNB) reaches the UE 1 with a propagation delay $\delta$ and after reading the system information UE 1 transmits RACH. The transmitted RACH reaches the UE 1 with an additional propagation delay $\delta$ causing a total propagation delay $2\delta$ which is referred to as the round trip time (RTT). In order to compensate this delay, in the prior art, the base station estimates the delay from the RACH and sends the UE the timing advance (TA) command to adjust its time.

However, the resolution of the timing advance is low since the bandwidth of the RACH is very low.

In prior art 5G communication systems, a Multi-RTT technique has been also introduced to estimate the positioning of a user using multiple RTT measurements from multiple base stations 2. The RTT is estimated using RX-TX time difference (RX stands for receiver and TX stands for transmitter) obtained by transmitting a Positioning Reference Signal (PRS) in the downlink and a SRS (Sounding Reference Signal) in the uplink. The Sounding Reference Signal (SRS) is conventionally used for the wideband channel estimation to measure the channel quality as well as positioning in the uplink. However, the accuracy of the RTT depends on the bandwidth allocated for both PRS and SRS. Further, in existing multi-RTT techniques, RTT estimated using Multi-RTT scheme requires combining the time of arrivals from PRS and SRS, thereby resulting in huge resources in frequency. Additionally, the Time taken to obtain the RTT is high as it is needed to send PRS and wait for the SRS transmission as well as for the estimated PRS from the UE 1. Existing RTT schemes also require an additional PRS receiver which adds complexity at the UE 1.

Another drawback of prior art RTT solutions relates to the fact that existing multi-RTT scheme is not robust to the clock offset due to the waiting time between the reception of PRS and transmission of SRS.

In existing approaches combining the time of arrivals from PRS and SRS, to initiate the RACH procedure, a UE 1 is required to complete a RRC Reconfiguration procedure (RRCReconfiguration), while the SRS cannot be transmitted until the RRC Reconfiguration procedure is finished. A Clock drift is therefore introduced due to the waiting time required by the UE 1 to complete the RRC reconfiguration.

Embodiments of the disclosure provide an improved round trip time estimation scheme, referred to hereinafter as a single shot round trip time (SS-RTT) scheme, implemented in a communication system 100 to provide an enhanced RTT estimating scheme for UE positioning.

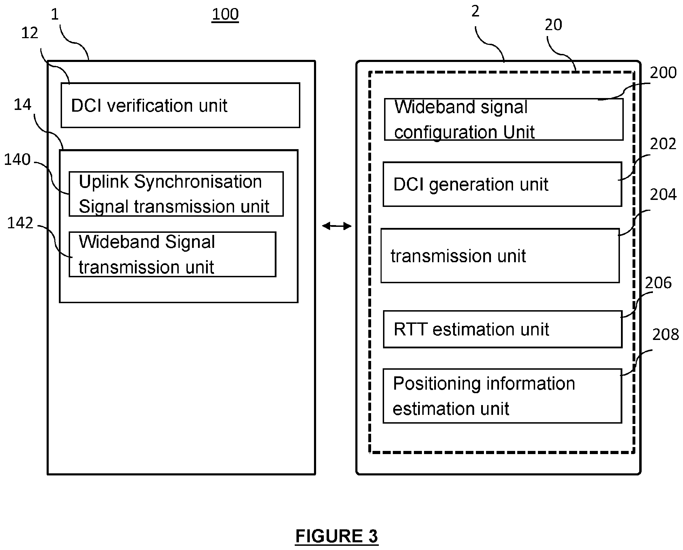

Figure 3 schematically represents a communication system 100 comprising at least a User Equipment 1 connected to a base station 2 implementing a RTT estimation scheme (also referred as a Single Shot Round Trip Time scheme or SS-RTT scheme), according to the embodiments of the disclosure.

The User Equipment (1) may use an uplink synchronisation procedure, such as the RACH procedure, to create an initial connection with the network 3, using at least two uplink synchronization messages (RACH messages) exchanged with the base station (2), comprising a first uplink synchronization message (Msg1 or MsgA) sent by the User Equipment 1 to the base station 2 .

The user equipment 1 and the base station 2 use a state-based signalling based on the state of the user equipment (1) to communicate through a network (3), the state of the UE 1 being an inactive state or an active state. The state-based signalling mechanism may be for example a RRC mechanism, in an application of the invention to the RACH procedure, the active state being the RRC connected state RRC-CONNECTED and the inactive state being the RRC inactive state RRC-INACTIVE.

According to the embodiments of the disclosure, the UE 1 is configured with a wideband Signal for determining configuring a wideband signal using RRC messages, which provides wideband signal configuration information.

In an application of the invention to the RACH procedure, the wideband signal used to signal the SS-RTT scheme may be a Sounding Reference Signal (SRS). A SRS signal uses low-PAPR sequence arranged in a comb fashion (one SRS symbol for every transmission Comb). SRS may span {1,2,4,8,12} OFDM symbols given by a field called nrofSymbols. An aperiodic SRS is transmitted aperiodically. In an aperiodic SRS transmission, initially, the aperiodic SRS configuration is signaled via RRC messages to the UE 1 and can be triggered aperiodically using the DCI.

The communication system 100 advantageously implements a signalling procedure which uses the Downlink Control Information (DCI) as a SS-RTT signalling mechanism to trigger un uplink synchronization procedure (RACH procedure for example) along with the wideband signal transmission (SRS in an application to the RACH procedure) to estimate the Round-Trip-Time (RTT) and use the RTT to determine positioning information related to the position if the user equipment, including the range between the user equipment 1 and the base-station 2.

The base station 2 may comprise a positioning device 20 configured to determine positioning information related to a User equipment 1, in response to a positioning request.

The positioning device 20 may comprise:

- a wideband signal configuration unit 200 adapted to configure the wideband signal (aperiodic SRS in the case of a RACH procedure) to the UE 1 using the state-based signalling mechanism. In a RACH procedure embodiment of the invention using the RRC mechanism as a state-based signalling mechanism and a SRS signal as a wideband signal to signal the SS-RTT scheme, the wideband signal configuration unit 20 may use the RRC Setup to the UE 1 in the beginning of the UE connection or using RRC Reconfiguration to determine SRS configuration information. The positioning device 20 may send the wideband signal configuration information (SRS configuration information for example) to the User Equipment 1.

- A DCI generation unit 202 configured to generate a DCI in a DCI format scrambled with P-RNTI if the UE1 is in inactive state (for example RRC_INACTIVE state if a RRC mechanism is used) or in a DCI format scrambled with C-RNTI if the UE1 is in an active state (for example RRC-CONNECTED state if RRC mechanism is used), the DCI comprising a field indicating whether a SS-RTT scheme is used or having a specific DCI format indicating whether a SS-RTT scheme is used. The generated DCI is therefore configured to initiate/trigger the Round Trip Time procedure (and therefore is used as a SS-RTT signalling mechanism).

- A transmission unit 204 configured to transmit messages associated with the uplink synchronisation procedure (which may be for example a two-step RACH or four-step RACH procedure) initiated by the UE 1.

- A RTT estimation unit 206 configured to estimate RTT based on the wideband signal (SRS for example) received from the user equipment 1 to be positioned, during the uplink synchronisation procedure (RACH procedure for example) next to the uplink synchronisation signal (RACH preamble) sent by the UE1, in the same time slot.
- A positioning information estimation unit 208 configured to determine one or more positioning information (also referred to as 'positioning parameters') including the distance d between the user and the base station 2. In some embodiments, the positioning information estimation unit 208 may be further configured to estimate angular information from the estimated RTT.

The user equipment 1 may comprise:

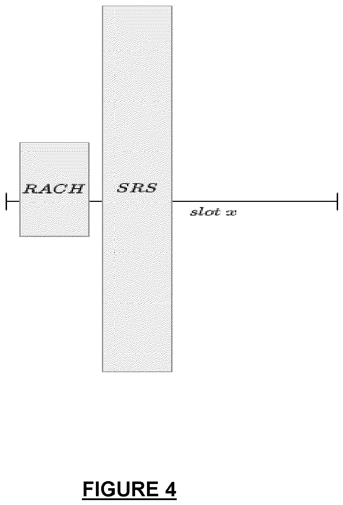

- A DCI verification unit 12 configured to receive a DCI scrambled with P-RNTI or with C-RNTI from the base station 2 and to determine if the DCI is associated with a SS-RTT from the DCI (DCI fields or DCI format).
- A transmission unit 14 configured to transmit the messages associated with the uplink synchronisation procedure (for example two-step RACH procedure or the four-step RACH procedure). The transmission unit 14 may comprise an uplink synchronisation signal transmission unit 140 configured to initiate the uplink synchronisation procedure (RACH procedure for example) if the scrambled DCI received from the base station 2 is associated with a SS-RTT scheme, and to transmit the uplink synchronisation procedure messages to the base station 2 (including the first uplink synchronisation message such as msg1 or msgA in the RACH procedure). The transmission unit 14 further comprises a wideband signal transmission unit 142 configured to transmit the wideband signal (such as an aperiodic SRS in the RACH procedure application of the invention) besides the uplink synchronisation signal, in the same time slot, to the base station 2, according to the wideband signal configuration information received from the base station 2. In response to the receipt of the sent wideband signal (SRS for example) by the base station 2, the base station 2 may be configured to estimate the RTT (block 206 of figure 4).

In an application of the invention to the RACH procedure (as an uplink synchronisation procedure), the UE 1 may further comprise a selection unit (not shown) configured to select, at the UE, between a two-step RACH procedure or a four-step RACH procedure, based on a threshold value comprised in RACH configuration information received from the base station 2 or stored at the UE.

According to the embodiments of the disclosure, the DCI is accordingly used to initiate the wideband signal transmission (for example SRS in an application of the invention to the RACH procedure) along with the uplink synchronisation signal (for example RACH preamble in an application of the invention to the RACH procedure).

Advantageously, the wideband signal (e.g. SRS) is transmitted by the UE1 in the same slot as the uplink synchronisation signal (e.g. RACH preamble) to be robust to clock offset.

The embodiments of the disclosure accordingly provide a wideband signal (SRS) sent immediately next to the uplink synchronization signal, the wideband signal transmission being triggered using a SS-RTT signalling mechanism based on the DCI. The transmission of the wideband signal immediately next to the uplink synchronization signal enables estimating the round trip time in a single shot with a higher resolution than the uplink synchronization signal.

To facilitate the understanding of the disclosure, the following description of embodiments of the invention will be made with reference to an application of the invention to an uplink synchronization procedure being a RACH procedure (two-step or four-step RACH procedure), the uplink synchronization signal being a RACH preamble, the state-based signalling mechanism being a RRC mechanism, with the active state of the UE 1 being a RRC-CONNECTED state and the inactive state of the UE 1 being a RRC_INACTIVE state, and wherein the wideband signal is an aperiodic SRS signal sent by the UE 1 to the base station 2 in the same time slot as the RACH preamble (uplink synchronization signal) to trigger the SS-RTT estimation.

Each RACH Slot comprises a number of RACH occasions and SRS occasions. A SRS Occasion associated with a SRS transmission provides time and frequency resources where a UE can send SRS in the same time slot as the RACH transmission.

Figure 4 illustrates the time domain allocation of RACH and SRS in the SS-RTT scheme and shows a time slot $x$ where the RACH preamble and then the SRS are sent in the same time slot $x$ to the base station 2, the sent SRS being used to estimate the RTT by the base station 2.

The SRS may have a higher bandwidth than the bandwidth allocated to the RACH to enable obtaining the RTT with higher accuracy.

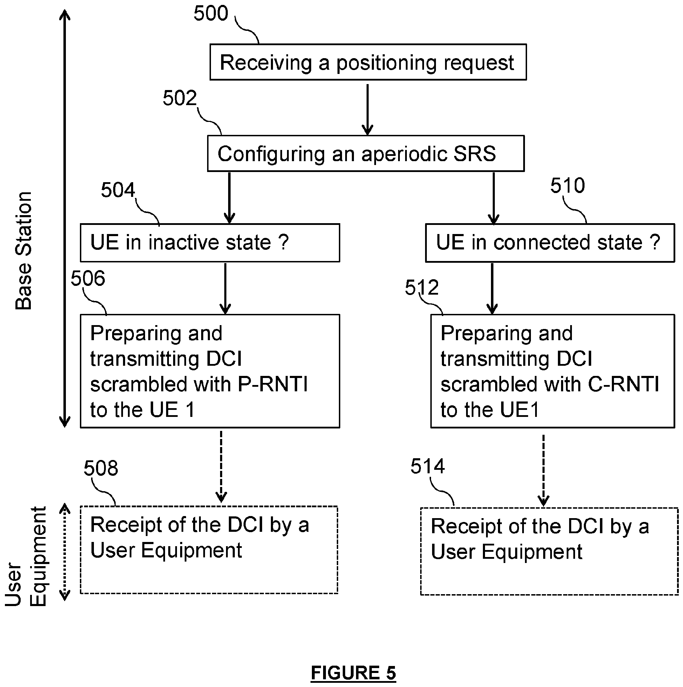

Figure 5 depicts an enhanced Round-Trip-Time estimation method (also referred to as a "single shot round trip time method" or SS-RTT method), according to embodiments of the disclosure.

In step 500, a positioning request may be received by the base station 2 from a Location Management Function (LMF) 5 for positioning a user equipment 1 using the SS-RTT scheme, according to embodiments of the disclosure.

In step 502, the aperiodic SRS may be configured by the base station 2 using a RRC Setup to the UE 1 in the beginning of the UE connection or using RRC Reconfiguration, which provides SRS configuration information. The base station may determine the SRS configuration information and send them to the User Equipment 1 in RRC setup or RRC reconfiguration.

The SRS aperiodic configuration is valid as long as the UE 1 is in a RRC_INACTIVE and a RRC_CONNECTED state.

If the UE is in RRC_INACTIVE state (block 504), in step 506, a DCI is generated by scrambling CRC bits of a DCI format by P-RNTI by the base station 2 and the DCI thus generated is transmitted by the base station 2 to the User Equipment 1. The DCI may advantageously comprise a field (SRS request field) used to signal the SS-RTT scheme to the UE1.

In step 508, the UE 1 may receive the DCI scrambled with P-RNTI from the base station 2 and use it to initiate the RACH procedure.

If the UE is in RRC_CONNECTED state (block 510), in step 512 a DCI is generated by scrambling CRC bits belonging to a DCI format by C-RNTI by the base station 2 and the generated DCI is transmitted to the UE1 by the base station.

In step 514, the DCI scrambled with C-RNTI is received by the User Equipment 1 which initiates the RACH procedure. The DCI may advantageously comprise a field (SRS request field) used to signal the SS-RTT scheme to the UE1.

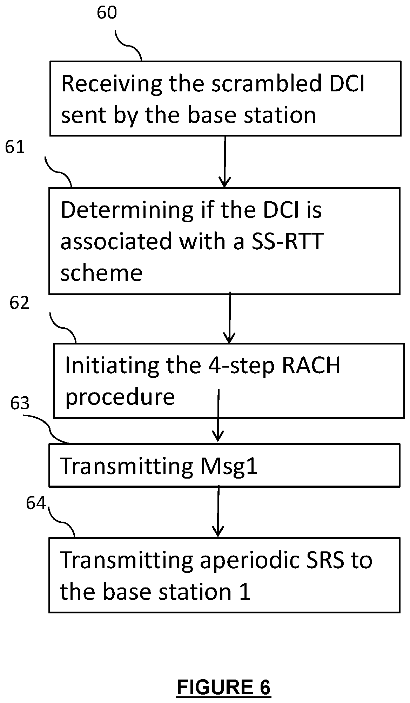

Figure 6 is a flowchart illustrating the RACH procedure method initiated by the UE 1 in step 508 or 514 of figure 5 (case of RRC_INACTIVE STATE or RRC-CONNECTED STATE), if the RACH procedure initiated by the UE 1 is a 4-step RACH, according to some embodiments.

In step 60, the UE 1 receives the DCI scrambled with P-RNTI sent by the base station and determines, in step 61, if the DCI is associated with a SS-RTT either from the DCI fields (if the DCI comprises a SRS request field signalling a round trip time estimation scheme) or from the DCI format is the DCI is in a specific DCI format, referred to as DCI Format X_Y, defined to signal the SS-RTT scheme.

If so, in step 62, the UE1 initiates a 4-step RACH procedure.

In step 63, the first message Msg1 (RACH preamble) is transmitted by the UE 1.

In step 64, the aperiodic SRS is transmitted by the UE 1 to the base station 2, configured via RRC messages with reference to the RACH preamble.

In response to the receipt of the aperiodic SRS, the base station 2 is then configured to estimate the RTT from the received SRS.

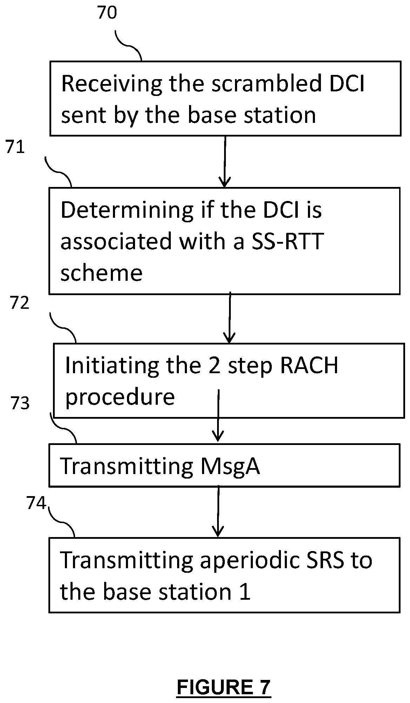

Figure 7 is a flowchart illustrating the RACH procedure method initiated by the UE 1 in steps 508 or 514 of figure 5 (case of RRC_INACTIVE STATE or RRC-CONNECTED STATE), if the RACH procedure initiated by the UE 1 is a 2-step RACH, according to some embodiments.

In step 70, the UE 1 receives the DCI scrambled with P-RNTI or C-RNTI sent by the base station 2 (depending on the RRC state of the UE) and determines, in step 71, if the received DCI is associated with a SS-RTT either from the DCI fields (if the DCI comprises a SRS request field signalling a round trip time estimation scheme) or from the DCI format is the DCI is in a specific DCI format, referred to as DCI Format X_Y, defined to signal the SS-RTT scheme.

If so, in step 72, the UE1 initiates a 2-step RACH procedure.

In step 73, the first message MsgA is transmitted by the UE 1.

In step 74, the aperiodic SRS is transmitted by the UE 1 to the base station, configured via RRC messages with reference to the RACH preamble.

In response to the receipt of the aperiodic SRS, the base station 2 is configured to estimate the RTT from the received SRS in step 74.

In the SS-RTT scheme according to the embodiments of the disclosure, the aperiodic SRS is transmitted in steps 62 and 72 besides the RACH, when the UE 1 is in RRC_INACTIVE state or in RRC_CONNECTED state.

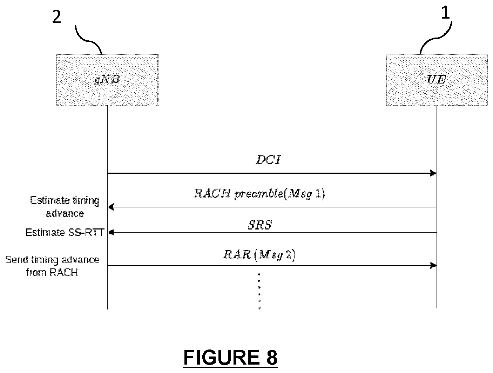

Figure 8 depicts the data exchanged between the base station 2 and the UE 1 in the SS-RTT method according to embodiments of the disclosure, when the UE 1 triggers a 4-step RACH procedure.

As shown in figure 8, the DCI scrambled with P-RNTI (step 504) or the DCI scrambled with C-RNTI (step 510) depending on whether the UE is in RRC_INACTIVE and RRC_CONNECTED state is first sent from the base station 2 to the UE 1.

The RACH preamble is then sent from the UE 1 to the base station 2 in Msg1 and may be used to enable estimating timing advance. According to the embodiments of the invention, the timing advance estimated at this stage is just sent to the UE 1 in Msg2 but not used to determine the RTT. Instead, according to the embodiments of the invention, the transmission of the SRS in the same slot as the RACH is used for high resolution RTT estimation.

The aperiodic SRS is then sent, separately from the RACH transmission, from the UE 1 to the base station 2 to estimate the RTT.

The base station may then send timing advance to the UE1 from the RACH in Msg2 which corresponds to the Random Access Response (RAR).

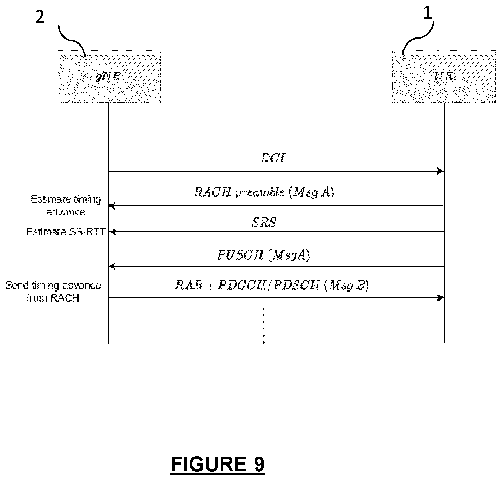

As shown in figure 9, the DCI scrambled with P-RNTI (step 504) or with C-RNTI (step 510) depending on whether the UE is in RRC_INACTIVE and RRC_CONNECTED state is first sent from the base station 2 to the UE 1.

The RACH preamble is then sent from the UE 1 to the base station 2 in MsgA and enables estimating timing advance (which is not used for the RTT estimation).

The aperiodic SRS is then sent, separately from the RACH transmission, from the UE 1 to the base station 2 to estimate the RTT.

The PUSCH is then sent in MsgA from the UE 1 to the base station 2.

The base station may then send timing advance to the UE 1 from the RACH in MsgB which includes the Random Access Response (RAR), the PDCCH and/or PDSCH.

In some embodiments, the RACH preamble index associated with the RACH preamble may be mapped with a cyclic shift of the SRS.

This means that the RACH preamble is sent in the DCI for the contention free random access case while SRS is generated based on the RACH preamble accordingly. In the case of contention based random access, the UE 1 may generate the cyclic shift of the SRS based on the random preamble it transmits.

Contention based random access only happens in the case of DCI format 1_0 scrambled with P-RNTI (RRC_INACTIVE state).

Alternatively, a RACH Occasion may be mapped with a SRS occasion similarly to the mapping between a RACH occasion and a PUSCH occasion in the 2-step RACH in order to avoid interference in the case of multiple user localization.

To determine if a SS-RTT scheme is used in step 61 of figure 6 and step 71 of figure 7, the DCI generated by the base station 2 in step 506 and 512 of figure 4 may include a new SRS request field. This SRS request field included in the generated DCI may be used by the user equipment 1, in response to the receipt of the DCI from the base station, to determine if the SRS is to be transmitted to the base station 2, in along with the RACH procedure, in the same time slot.

In some embodiments, the SS-RTT method may comprise an initialization step for initializing the SS-RTT scheme using a DCI based signalling procedure that may be a first DCI based signalling procedure or a second DCI based signalling procedure.

According to the first DCI based signalling procedure, the step of generating the DCI in steps 506 or 512 of figure 5, may comprise using a DCI format derived from the DCI Format 1_0, the DCI format derived from the DCI Format 1_0 comprising the SRS request field that is used to signal the SS-RTT scheme.

The DCI format derived from DCI Format 1_0 may therefore be used to trigger RACH procedure in both RRC_INACTIVE state and in the RRC_CONNECTED states in step 506 or 512 of figure 5. In such embodiment, the new field, referred to as the SRS request field, is added to initiate the SRS in the same slot along with the RACH procedure.

In particular, step 506 may use the DCI format derived from the DCI Format 1_0 with CRC scrambled by P-RNTI for RAN Paging (also referred to as "DCI Format 1_0 for RAN paging" hereinafter), if the user equipment 1 is in a RRC_INACTIVE state. Step 512 may use the DCI format derived from the DCI Format 1_0 with CRC scrambled by C-RNTI for PDCCH order, if the user equipment 1 is in a RRC_CONNECTED state.

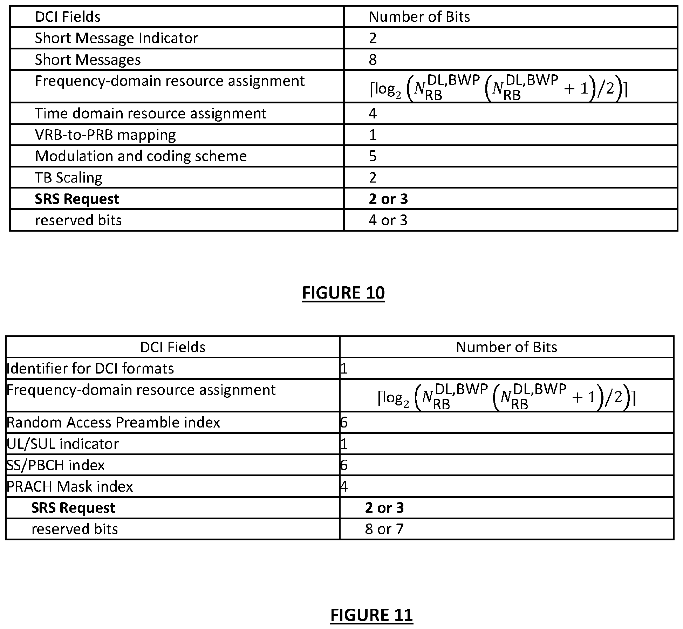

As depicted in figure 10, if the user equipment 1 is in a RRC_INACTIVE state, the DCI format derived from the DCI Format 1_0 for RAN Paging may comprise a new field corresponding to the SRS request field used to signal the SS-RTT scheme and thereby trigger the transmission of the SRS by the UE 1 to the base station 2 in the same slot as the RACH preamble.

The SRS request field in such case may comprise 2 or 3 bits. The reserved bits fields may comprise 3 or 4 bits.

As depicted in figure 10, the DCI format derived from the DCI Format 1_0 for RAN paging may comprise the following fields:

- A Short Message Indicator (2 bits);
- A Short Message (8 bits)
- A Frequency-domain resource assignment (having a number of bits equal to $\lceil\log_2(N_{RB}^{DL,BWP}(N_{RB}^{DL,BWP}+1)/2)\rceil)$ with $N_{RB}^{DL,BWP}$ indicating the size of coreset 0;
- A Time domain resource assignment (4 bits);
- A Random Access Preamble index (6 bits);
- A VRB-to-PRB (Virtual Resource Blocks-to-Physical Resource Blocks) mapping (1 bit) ;
- A Modulation and coding scheme (5 bits);
- A TB (Transport Block) Scaling (2 bits);
- The new SRS request field (2 or 3 bits)
- The « Reserved bits » field (3 or 4 bits).

The SRS request field comprising 2 bits, as defined by Table 7.3.1.1.2-24 of 3GPP Technical specification TS 38.212, is for UEs not configured with SUL (supplementary Uplink) in the cell, while the SRS request field comprising 3 bits is for UEs configured with SUL in the cell where the first bit is the non-SUL/SUL indicator as defined in Table 7.3.1.1.1-1 (3GPP TS 38.212) and the second and third bits are defined by Table 7.3.1.1.2-24 (3GPP TS 38.212).

The Time domain allocation of SRS is with reference to the PRACH symbol.

In response to the receipt of the DCI sent by the base station 2 in step 506 in the DCI format derived from DCI Format 1_0 for RAN paging, the UE1 may receive it (in steps 60 or 71 of figures 6 and 7), decode the PCCH messages present in the PDSCH, and check if the identifier full I-RNTI or short I-RNTI present in the PCCH message matches respectively the full I-RNTI or short I-RNTI present in the suspend configuration parameter (Suspend Config) of the UE 1. If the identifiers match, then the UE 1 may initiate a contention based RACH procedure along with the SRS.

In a Contention based RACH Procedure (CBRA), a UE 1 may randomly select the preamble in a zadoff chu sequence and send the RACH request towards the network. Multiple UEs may send the PRACH with the same preamble so that the same PRACH preamble can be reached to the network from multiple UEs at the same time, triggering PRACH collisions ("Contention"). The Contention based RACH Process is a RACH process allowing this type of contention is called.

If the user equipment 1 is in a RRC_CONNECTED state, the DCI format derived from the DCI Format 1_0 with CRC scrambled by C-RNTI for PDCCH order may comprise the new SRS request field (for example 2 or 3 bits), as depicted in figure 11.

As depicted in figure 11, the DCI format derived from the DCI Format 1_0 with CRC scrambled by C-RNTI for PDCCH order may comprise the following fields:

- An Identifier for DCI formats(1 bit);
- A Frequency-domain resource assignment (having a number of bits equal to $\lceil \log_2(N_{RB}^{DL,BWP}(N_{RB}^{DL,BWP} + 1)/2)\rceil$) with $N_{RB}^{DL,BWP}$ indicating the size of coreset 0;
- An Uplink/Supplemental Uplink (UL/SL) indicator for indicating which uplink carrier to be used in the base station cell to transmit the PRACH (1 bit);
- A Synchronization Signal / Physical Broadcast Channel (SS/PBCH) index field for indicating the SS/PBCH that shall be used to determine the RACH occasion for a PRACH transmission; and
- A PRACH Mask index field comprising 4 bits;
- The new SRS request field (2 or 3 bits)
- A « reserved bits » field (7 or 8 bits).

The SRS request field may comprise 2 bits as defined by Table 7.3.1.1.2-24 (3GPP TS 38.212) for UEs not configured with SUL (supplementary Uplink) in the cell and 3 bits for UEs configured with SUL in the cell where the first bit is the non-SUL/SUL indicator as defined in Table 7.3.1.1.1-1 (3GPP TS 38.212) and the second and third bits are defined by Table 7.3.1.1.2-24 (3GPP TS 38.212).

In this case, the time domain allocation of SRS is with reference to the PRACH symbol.

Alternatively, the second DCI based signalling procedure comprises scrambling a DCI in a novel DCI Format X_Y comprising the SRS request field, the SRS request field of the DCI Format X_Y being used to trigger the UE to transmit the SRS along with the RACH in steps 62 of figure 6 and 72 of figure 7.

According to some embodiments, if the UE is in RRC_INACTIVE state, the DCI Format X_Y may be scrambled with the P-RNTI, as it may be received by all the user equipments UEs, similarly to the paging messages that use DCI Format 1_0 scrambled with P-RNTI.

If a UE is in RRC_CONNECTED state, the DCI Format X_Y may be scrambled with C-RNTI.

The DCI Format X_Y is further adapted for Contention Free Random Access CFRA (i.e. the DCI Format X_Y enables CFRA) when the UE is in RRC_INACTIVE state or RRC_CONNECTED state. The CFRA procedure is implemented in cases where contentions are not acceptable (for example due to timing restriction), and can be prevented. In such scenario, the network may inform each UE of which preamble indexes it has to use for PRACH and when and allocate the preamble indexes to avoid collision.

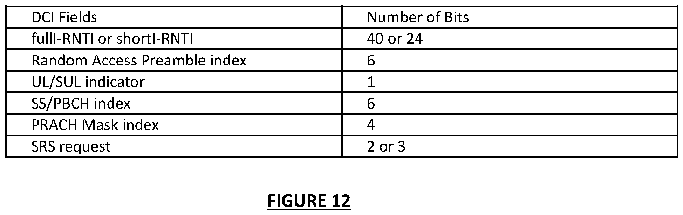

Figure 12 depicts the DCI Format X_Y configured to enable transmission of the SRS along with the RACH.

As illustrated by figure 12, the DCI Format X_Y may comprise:

- A full I-RNTI or short I-RNTI field comprising 24 or 40 bits. This I-RNTI field is used is used to identify the suspended UE context of a UE in RRC_INACTIVE.

- A Random Access Preamble index field comprising 6 bits; this field indicates the index of the Random access preamble and may be defined similarly to the parameter ra-PreambleIndex of 3GPP, Clause 5.1.2, 8, TS 38.321. If Random Access Preamble index is set to all zeros then a contention based random access procedure may be initiated.

- A UL/SUL indicator comprising 1 bit. If the value of the "Random Access Preamble index" is not all zeros and if the UE is configured with SUL (supplementary Uplink) in the cell, this UL/SUL field indicates which UL carrier in the cell to transmit the PRACH according to Table 7.3.1.1.1-1 of the 3GPP TS 38.212; otherwise, this field is reserved.

- A SS/PBCH index field comprising 6 bits. If the value of the "Random Access Preamble index" is not all zeros, this SS/PBCH field indicates the SS/PBCH that shall be used to determine the RACH occasion for the PRACH transmission; otherwise, this field is reserved.

- A PRACH Mask index field comprising 4 bits; If the value of the "Random Access Preamble index" is not all zeros, this PRACH Mask index field indicates the RACH occasion associated with the SS/PBCH indicated by "SS/PBCH index" for the PRACH transmission, according to Clause 3GPP Clause 5.1.1 of 8, TS38.321); otherwise, this field is reserved.

- A SRS request field comprising 2 or 3 bits. The SRS request field may comprise 2 bits as defined by Table 7.3.1.1.2-24 of 3GPP TS 38.212 for UEs not configured with SUL (supplementary Uplink) in the cell and 3 bits for UEs configured with SUL (supplementary Uplink) in the cell where the first bit is the non-SUL/SUL indicator as defined in Table 7.3.1.1.1-1 of 3GPP TS 38.212 and the second and third bits are defined by Table 7.3.1.1.2-24 of 3GPP TS 38.212.

The Time domain allocation of SRS is made with reference to the PRACH symbol.

In some embodiments, a field useFullResumeID may be used in the System Information Block of type 1 (SIB1) sent by the base station 2 to the User Equipment 1 to indicate whether full I-RNTI or short I-RNTI is used in the DCI Format X_Y. The SIB1 carries all the basic information for UE to perform the initial attachment procedure SIB1 and is carried by the physical channel PDSCH.

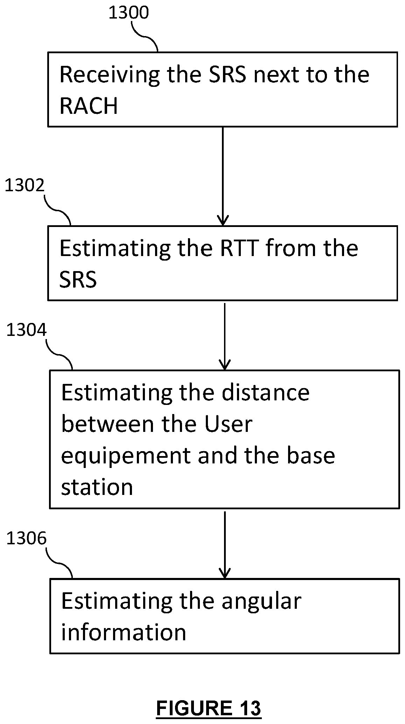

Figure 13 is a flowchart depicting the round trip time estimation, performed at the base station, according to some embodiments (step 64 of figure 6 and step 74 of figure 7).

In step 1300, the RACH first message and the aperiodic SRS are received.

In step 1302, in response to the receipt of the aperiodic SRS, the base station 2 may estimate the RTT from the received SRS channel impulse response (step 64 of figure 6 and step 74 of figure 7) that is present next to the RACH.

The round trip time $RTT$ between the base station 2 and the UE 1 is determined from the time of arrival estimated from the SRS channel impulse response that is present next to the RACH according to equation (1):

$$RTT = \frac{p}{f_s} \quad (1)$$

In equation (1), $p$ designates the peak index of the time of arrival estimated from the SRS channel impulse response and $f_s$ is the sampling rate of the modulation system (such as OFDM system). The peak parameter $p$ is obtained from the peak of the channel impulse response.

The RTT estimated in step 1300 may be then used to estimate at least one positioning parameter related to the user equipment position, including the distance d between the base station 2 and the User Equipment 1.

In step 1304, the distance d between the base station 2 and the User Equipment 1 may be determined according to equation (3) from the estimated RTT:

$$d = \frac{RTT * c}{2} = \frac{p * c}{2 f_s} \quad (3)$$

In Equation (3), the parameter c designates the speed of light.

In step 1306, if the base station 2 comprises a plurality of antennas comprising at least a calibrated antenna and a single base-station, each antenna may receive SRS from the user equipment. In this case, the positioning parameters may include the angular information. The angular information may be estimated using the multiple SRS received at the multiple antennas of the base station 2 from the user equipment 1 (sent in step 64 of figure 6 and step 74 of figure 7).

As used herein, the angular information refers to the azimuth angle of arrival $\theta$, in two dimensions, or to the azimuth $\theta$ and the elevation angle of arrival $\phi$, in 3 dimensions of the line-of-sight multi-path components present in the uplink. This angle of arrival information can be estimated using the multiple antennas (such as a uniform linear array, for two dimension position information or uniform rectangular array, for three dimension position information) present at the base station 2 using suitable estimation algorithms.

The two dimensional position of a user equipment (p,q) or three dimensional position of a user equipment (p,q,r) may be carried using the estimated distance d and the angular information (angle $\theta$ or pair of values $(\theta, \phi)$) with respect to the position of the base station (x,y,z) according to equation (4) in 2 dimensions or equation (5) in 3 dimensions:

$$(p, q) = (x + d cos\theta, y + d sin\theta) \ (4)$$

$$(p, q, r) = (x + d cos\phi sin\theta, y + d cos\phi cos\theta, z + d cos\phi) \ (5)$$

The skilled person will readily understand that although the above embodiments of the RTT estimation method have been described mainly with reference to a 5G/NR system, the embodiments of the invention more generally apply to any mobile communication system in which an uplink synchronization signal (PRACH in the above examples) is used, where a state-based signalling mechanism based on the state of the user (RRC mechanism in the above examples) is used for the communication between the user equipment 1 to be positioned and the base station 2, the User Equipment state being an active (or connected in a RRC embodiment) state or inactive state. The embodiments of the disclosure advantageously use the transmission of a wideband signal (SRS in the above embodiments of the invention) in the uplink immediately next to the uplink synchronization signal (e.g. RACH preamble). The configuration of the wideband signal is then sent in steps 60 or 70 using the state-based signalling mechanism (e.g. RRC), and the SS-RTT scheme is signaled using a DCI based signalling mechanism, as described above, depending on the state of the user equipment 1 to be positioned (active or inactive).

Therefore, the disclosure more generally provides a method of positioning a user equipment 1 implemented in a communication system 100 comprising at least a user equipment and a base station 2, the user equipment 1 and the base station 2 using a state-based signalling mechanism based on the state of the user equipment to communicate through a network 3, the state being an inactive state or a connected state. The method comprises the following steps implemented at the base station 2:

- Determining (at step 502) a wideband signal configuration using the state based signalling mechanism;
- Generating (steps 506, 512) a Downlink Control Information DCI scrambled with a type of radio network temporary identifier, the type of radio network temporary identifier RNTI depending on the state of the user equipment,
- Transmitting (steps 506, 512) the generated DCI to the User Equipment (1).

The method further comprises, in response to an uplink synchronisation procedure initiated by the user equipment (1) from the received generated DCI, the following steps implemented at the base station:

- Receiving a first uplink synchronisation message msgA or msg1 for example) from the user equipment 1 comprising an uplink synchronisation signal (PRACH) in a given time slot;
- Receiving a wideband signal impulse response corresponding to the wideband signal configuration besides said uplink synchronisation signal, in said given time slot;
- Estimating the round trip time RTT between the base station 2 and the user equipment 1 from the time of arrival estimated from said wideband signal impulse response and the sampling rate of the modulation system used by the communication system;
- Estimating at least one positioning parameter related to the user equipment position from said estimated RTT.

Compared to the existing schemes, the embodiments of the disclosure obviate the need for a transmission of a wideband signal in the downlink reducing frequency resources as well as the computational complexity at the UE. They also enable reducing the time needed to obtain the Round Trip Time as it can be performed in a single shot within a slot.

The embodiments of the disclosure thereby enable performing positioning of the UE1 using a single base-station that is robust to clock offset, lower complexity and fewer resources.

The embodiments of the disclosure advantageously provide an improved round trip time estimation scheme (single shot round trip time measurement scheme) that enables round trip time to be estimated at the base station 2, in the uplink, using fewer resources and computations in a single shot. The round trip time estimation scheme according to the embodiments of the disclosure is robust to the clock offset present between the base station 2 and the user equipment 1 and enables estimation of the round trip time both in the RRC_INACTIVE and RRC_CONNECTED state. The round trip time estimation scheme according to the embodiments of the disclosure enables contention free random access in RRC_INACTIVE state.

Advantageously, the single shot round trip time according to the embodiments of the disclosure is independent of the over-the-air physical waveform changes in the standards including synchronization waveform.

The UE 1 may be any physical internet-enabled device/object provided with required hardware and/or software technologies enabling communication over Internet. The UE 1 may be any standard internet connected-devices such as desktop computers, servers, virtual machines laptops, smart-phones, tablets. In some applications of the disclosure, the UE 1 may be any IoT/M2M device or connected device operating in an IoT/M2M network such as medical devices, temperature and weather monitors, connected cards, thermostats, appliances, security devices, drones, smart clothes, eHealth devices, robots, and smart outlets.

Embodiments of the present disclosure can take the form of an embodiment containing software only, hardware only or both hardware and software elements.

Furthermore, the methods described herein can be implemented by computer program instructions supplied to the processor of any type of computer to produce a machine with a processor that executes the instructions to implement the functions/acts specified herein. These computer program instructions may also be stored in a computer-readable medium that can direct a computer to function in a particular manner. To that end, the computer program instructions may be loaded onto a computer to cause the performance of a series of operational steps and thereby produce a computer implemented process such that the executed instructions provide processes for implementing the functions specified herein. In particular, the methods described herein may be implemented in a computer system.

It should be noted that the functions, acts, and/or operations specified in the flow charts, sequence diagrams, and/or block diagrams may be re-ordered, processed serially, and/or processed concurrently consistent with embodiments of the disclosure. Moreover, any of the flow charts, sequence diagrams, and/or block diagrams may include more or fewer blocks than those illustrated consistent with embodiments of the disclosure.

While embodiments of the disclosure have been illustrated by a description of various examples, and while these embodiments have been described in considerable detail, it is not the intent of the applicant to restrict or in any way limit the scope of the appended claims to such detail.

The communication system 100 according to the embodiments of the disclosure may be used in various applications such as Massive MTC (mMTC) to provide connectivity to a large number of devices that transmit sporadically a low amount of traffic, Machine-To-Machine (M2M), Web-of-Things (WoT), and Internet of Things (IoT) (for example vehicle-to-everything V2X communications) involving networks of physical devices, machines, vehicles, home alliances and many other objects connected to each other and provided with a connectivity to the Internet and the ability to collect and exchange data without requiring human-to-human or human-to-computer interactions.

For example, in IoT applications, the communication system 100 may be a wireless network, for example a wireless IoT/M2M network representing low energy power-consumption/long battery life/low-latency/low hardware and operating cost/high connection density constraints such as low-power wide area networks and low-power short-range IoT networks.

The communication system 100 may be used in various consumer, commercial, industrial, and infrastructure applications. Exemplary consumer applications comprise connected vehicles (Internet of Vehicles IoV), home automation/smart home, smart cities, wearable technology, and connected health. Exemplary commercial applications comprise medical and healthcare and transportation. In the medical field, a digitized healthcare system connecting medical resources and healthcare services may be used in which special monitors and sensors are used to enable remote health monitoring and emergency notification. Exemplary industrial applications comprise applications in agriculture, for example in farming using sensors, to collect data on temperature, rainfall, humidity, wind speed, and soil content. Exemplary infrastructure applications may comprise the use of IoT devices to perform monitoring and controlling operations of urban and rural infrastructures such as bridges and railway tracks.

Additional advantages and modifications will readily appear to those skilled in the art. The disclosure in its broader aspects is therefore not limited to the specific details, representative methods, and illustrative examples shown and described.

## Claims

1. A method of positioning a user equipment (1) implemented in a communication system (100) comprising at least said user equipment and a base station (2), the user equipment (1) and the base station (2) using state-based signalling mechanism based on the state of the user equipment to communicate through a network (3), said state being an inactive state or active state, wherein the method comprises the following steps implemented at the base station (2):

   - Determining (502) a wideband signal configuration using the state-based signalling mechanism;
   - Generating (506, 512) a Downlink Control Information DCI scrambled with a type of radio network temporary identifier, the type of radio network temporary identifier RNTI depending on the state of the user equipment,
   - Transmitting (506, 512) the generated DCI to the User Equipment (1), wherein the method further comprises, in response to an uplink synchronisation procedure initiated by the user equipment (1) from the received generated DCI, the following steps implemented at the base station:
   - Receiving a first uplink synchronisation message from the user equipment comprising an uplink synchronisation signal in a given time slot;
   - Receiving (1300) a wideband signal impulse response corresponding to said wideband signal configuration besides said uplink synchronisation signal, in said given time slot ;

- Estimating (1302) the round trip time RTT between the base station (2) and the user equipment (1) from the time of arrival estimated from said wideband signal impulse response and the sampling rate of the modulation system used by the communication system;
- Estimating (1304, 1306) at least one positioning parameter related to the user equipment position from said estimated RTT.

**2.** The method of claim 1, wherein the round trip time RTT is estimated according to:

$$RTT = \frac{p}{f_s},$$

where p designates the peak index of the time of arrival estimated from said SRS channel impulse response and $f_s$ is the sampling rate of the modulation system of the communication system.

**3.** The method of claim 2, wherein said at least one positioning parameter comprises the distance d between the base station (2) and the User Equipment (1), said distance being determined as:

$$d = \frac{RTT*c}{2} = \frac{p*c}{2f_s},$$

where c designates the speed of light.

**4.** The method of any preceding claim, wherein the base station (2) comprises a plurality of antennas, said plurality of antenna comprising at least a calibrated antenna and a single base-station, and wherein said at least one positioning parameter comprises angular information estimated using the plurality of wideband signal received at said plurality of multiple antennas from the user equipment (1).

**5.** The method of any preceding claim, wherein the uplink synchronization procedure is a RACH procedure, the uplink synchronization signal is a RACH preamble, the state-based signalling mechanism is a RRC mechanism, the active state being a RRC-CONNECTED state and the inactive state being a RRC_INACTIVE state, and the wideband signal is an aperiodic SRS signal.

**6.** The method of claim 5, wherein if the given RRC state of the User Equipment is a RRC_INACTIVE state, the type of the radio network temporary identifier is a P-RNTI, the DCI generation step (506) comprises generating a DCI scrambled with a P-RNTI and/or wherein if the given RRC state of the User Equipment is a RRC_CONNECTED state, the type of the radio network temporary identifier is a C-RNTI, the DCI generation step (512) comprises generating a DCI scrambled with a C-RNTI.

**7.** The method of any preceding claim 5 to 6, wherein the method comprises using a first DCI based signalling procedure according to which the step of generating the DCI comprises using a scrambled DCI format derived from the DCI Format 1_0, the DCI format derived from the DCI Format 1_0 comprising a SRS request field, said SRS request field being used by the user equipment (1) to determine if the SRS is to be transmitted to the base station (2), in said given time slot along with the RACH procedure, in response to the receipt of the generated DCI.

**8.** The method of claims 6 and 7, wherein the DCI format derived from the DCI Format 1_0 comprises the fields of the DCI Format 1_0 with CRC scrambled with P-RNTI for RAN Paging, and an additional field corresponding to said SRS request field comprising 2 or 3 bits.

**9.** The method of claims 6 and 7, wherein the DCI format derived from the DCI Format 1_0 comprises the fields of the DCI Format 1_0 with CRC scrambled by C-RNTI for PDCCH order, and an additional field corresponding to said SRS request field comprising 2 or 3 bits.

**10.** The method of any preceding claim 5 to 6, wherein the method comprises using a second DCI based signalling procedure comprising scrambling a DCI in a specific DCI Format X_Y, said DCI Format X_Y being used by the user equipment (1) to determine if the SRS is to be transmitted to the base station (2), in said given time slot along with the RACH procedure, in response to the receipt of the generated DCI.

11. The method of claim 10, wherein said DCI Format X_Y comprises:

- A full I-RNTI or short I-RNTI field for identifying a suspended User Equipment context of a user equipment in RRC_INACTIVE state;
- A Random Access Preamble index field for indicating the index of the Random access preamble;
- An Uplink/Supplemental Uplink indicator for indicating which uplink carrier to be used in the base station cell to transmit the PRACH;
- A Synchronization Signal / Physical Broadcast Channel (SS/PBCH) index field for indicating the SS/PBCH that shall be used to determine the RACH occasion for a PRACH transmission; and
- A PRACH Mask index field for indicating the RACH occasion associated with the SS/PBCH indicated by the SS/PBCH index for the PRACH transmission; and
- A SRS request field.

12. The method of any claim 10 and 11 wherein the DCI Format X_Y is further adapted to enable Contention Free Random Access.

13. The method of any preceding claim 5 to 12, wherein the random access preamble is associated with a RACH preamble index, the method comprising mapping the RACH preamble index with a cyclic shift of the SRS.

14. The method of any preceding claim, wherein the method further comprises the following steps performed at the user equipment (1):

- Receiving (60, 70) at the user equipment (1) the DCI sent from the base station;
- Determining (61, 71) if the received DCI comprises at least one field related to a round trip time estimation scheme;
- Initiating (62, 72) an uplink synchronization procedure comprising exchanging at least a first message and a second message with the base station (2),
- Transmitting (63, 73) the uplink synchronization first message comprising the uplink synchronization signal to the base station (2) in the given time slot;
- Transmitting (64, 74) the wideband signal to the base station in said given time slot according to said wideband signal configuration.

15. A communication system comprising at least a user equipment (1) and a base station (2), the user equipment (1) and the base station (2) using a state-based signalling based on the state of the user equipment (1) to communicate through a network (3), said state being an inactive state or an active state, wherein the base station (2) comprises a positioning device (20) configured to determine positioning information related to the user equipment (1), wherein the positioning device (20) comprises:

- A wideband signal configuration Unit (200) configured to determine wideband signal configuration using the state-based signalling mechanism;
- A DCI generation unit (202) configured to generate a Downlink Control Information DCI scrambled with a type of radio network temporary identifier, the type of radio network temporary identifier RNTI depending on the state of the user equipment,
- A transmission unit (204) configured to transmit the generated DCI to the User Equipment (1),

   wherein the base station (2) is configured to receive a first uplink synchronisation message from the user equipment comprising an uplink synchronisation signal in a given time slot and wideband signal impulse response corresponding to said wideband signal configuration besides said RACH preamble, in said given time slot,
   wherein the positioning device (20) further comprises:

- A RTT estimation unit (206) configured to estimate the round trip time RTT between the base station (2) and the user equipment (1) from the time of arrival estimated from said wideband signal impulse response and the sampling rate of the modulation system of the communication system;
- A positioning information estimation unit (208) configured to estimate at least one positioning parameter related to the user equipment position from said estimated RTT.

**FIGURE 1**

**FIGURE 2**

**FIGURE 3**

**FIGURE 4**

500 → Receiving a positioning request

502 → Configuring an aperiodic SRS

504 → UE in inactive state ?                510 → UE in connected state ?

506 → Preparing and transmitting DCI scrambled with P-RNTI to the UE 1

512 → Preparing and transmitting DCI scrambled with C-RNTI to the UE1

508 → Receipt of the DCI by a User Equipment

514 → Receipt of the DCI by a User Equipment

Base Station

User Equipment

**FIGURE 5**

60

Receiving the scrambled DCI
sent by the base station

61

Determining if the DCI is
associated with a SS-RTT
scheme

62

Initiating the 4-step RACH
procedure

63

Transmitting Msg1

64

Transmitting aperiodic SRS to
the base station 1

**FIGURE 6**

70

Receiving the scrambled DCI sent by the base station

71

Determining if the DCI is associated with a SS-RTT scheme

72

Initiating the 2 step RACH procedure

73

Transmitting MsgA

74

Transmitting aperiodic SRS to the base station 1

**FIGURE 7**

**FIGURE 8**

**FIGURE 9**

| DCI Fields | Number of Bits |
|---|---|
| Short Message Indicator | 2 |
| Short Messages | 8 |
| Frequency-domain resource assignment | $\lceil \log_2 \left( N_{RB}^{DL,BWP} \left( N_{RB}^{DL,BWP} + 1 \right) / 2 \right) \rceil$ |
| Time domain resource assignment | 4 |
| VRB-to-PRB mapping | 1 |
| Modulation and coding scheme | 5 |
| TB Scaling | 2 |
| **SRS Request** | **2 or 3** |
| reserved bits | 4 or 3 |

## FIGURE 10

| DCI Fields | Number of Bits |
|---|---|
| Identifier for DCI formats | 1 |
| Frequency-domain resource assignment | $\lceil \log_2 \left( N_{RB}^{DL,BWP} \left( N_{RB}^{DL,BWP} + 1 \right) / 2 \right) \rceil$ |
| Random Access Preamble index | 6 |
| UL/SUL indicator | 1 |
| SS/PBCH index | 6 |
| PRACH Mask index | 4 |
| **SRS Request** | **2 or 3** |
| reserved bits | 8 or 7 |

## FIGURE 11

| DCI Fields | Number of Bits |
|---|---|
| fullI-RNTI or shortI-RNTI | 40 or 24 |
| Random Access Preamble index | 6 |
| UL/SUL indicator | 1 |
| SS/PBCH index | 6 |
| PRACH Mask index | 4 |
| SRS request | 2 or 3 |

**FIGURE 12**

1300

Receiving the SRS next to the RACH

1302

Estimating the RTT from the SRS

1304

Estimating the distance between the User equipement and the base station

1306

Estimating the angular information

**FIGURE 13**

Europäisches
Patentamt
European
Patent Office
Office européen
des brevets

# EUROPEAN SEARCH REPORT

Application Number

EP 23 30 6847

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2022/369271 A1 (JIANG CHUANGXIN [CN] ET AL) 17 November 2022 (2022-11-17) <br> * paragraph [0054] – paragraph [0055] * <br> * paragraph [0067] – paragraph [0069] * <br> * paragraph [0072] – paragraph [0076] * <br> * paragraph [0078] – paragraph [0080] * <br> * paragraph [0082] – paragraph [0084] * <br> * paragraph [0087] – paragraph [0090] * <br> ----- | 1-15 | INV. <br> H04W56/00 <br> G01S5/06 <br> G01S5/14 <br> H04W64/00 <br> H04W74/0833 |
| A | WO 2022/246344 A1 (QUALCOMM INC [US]) 24 November 2022 (2022-11-24) <br> * paragraph [0116] – paragraph [0117] * <br> * paragraph [0142] * <br> ----- | 1-15 | |
| A | CN 114 095 326 A (SAMSUNG ELECTRONICS CO LTD) 25 February 2022 (2022-02-25) <br> * the whole document * <br> ----- | 1-15 | |

|  |  |
|---|---|
|  | TECHNICAL FIELDS SEARCHED (IPC) |
|  | H04W <br> G01S |

The present search report has been drawn up for all claims

| Place of search | Date of completion of the search | Examiner |
|---|---|---|
| The Hague | 5 April 2024 | Arroyo Valles, |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 30 6847

This annex lists the patent family members relating to the patent documents cited in the above-mentioned European search report.
The members are as contained in the European Patent Office EDP file on
The European Patent Office is in no way liable for these particulars which are merely given for the purpose of information.

05-04-2024

| Patent document cited in search report | Publication date | Patent family member(s) | Publication date |
|---|---|---|---|
| US 2022369271 A1 | 17-11-2022 | BR 112022015070 A2 | 03-10-2023 |
| | | CA 3169324 A1 | 30-09-2022 |
| | | CN 115804116 A | 14-03-2023 |
| | | EP 4088489 A1 | 16-11-2022 |
| | | JP 2023522813 A | 01-06-2023 |
| | | KR 20220137006 A | 11-10-2022 |
| | | US 2022369271 A1 | 17-11-2022 |
| | | WO 2022205041 A1 | 06-10-2022 |
| WO 2022246344 A1 | 24-11-2022 | CN 117295964 A | 26-12-2023 |
| | | EP 4341717 A1 | 27-03-2024 |
| | | KR 20240008850 A | 19-01-2024 |
| | | WO 2022246344 A1 | 24-11-2022 |
| CN 114095326 A | 25-02-2022 | CN 109417453 A | 01-03-2019 |
| | | CN 114095326 A | 25-02-2022 |
| | | EP 3455994 A1 | 20-03-2019 |
| | | EP 3790216 A1 | 10-03-2021 |
| | | EP 4271059 A2 | 01-11-2023 |
| | | ES 2958984 T3 | 19-02-2024 |
| | | KR 20190009744 A | 29-01-2019 |
| | | US 2017366377 A1 | 21-12-2017 |
| | | US 2020228377 A1 | 16-07-2020 |
| | | WO 2017217805 A1 | 21-12-2017 |

EPO FORM P0459

For more details about this annex : see Official Journal of the European Patent Office, No. 12/82